# FASCICULE DE BREVET EUROPEEN

(11) **EP 2 094 379 B1**
(45) Date de publication et mention de la délivrance du brevet: **17.02.2010**
(21) Numéro de dépôt: 07858113.9
(22) Date de dépôt: 21.12.2007
(51) Int. Cl.: B01F 13/10, B01F 15/04, G01G 19/18

(54) **MACHINE POUR LA PRODUCTION AUTOMATISEE DE COMPOSITIONS DE MATIERES PREMIERES TELLES QUE LIQUIDES, POUDRES, OU PATES DANS UNE CUVE TRANSPORTABLE**
MASCHINE FÜR DIE AUTOMATISIERTE PRODUKTION VON ROHMATERIALZUSAMMENSETZUNGEN WIE ETWA FLÜSSIGKEITEN, PULVER ODER PASTEN IN EINEM TRAGBAREN KESSEL
MACHINE FOR THE AUTOMATED PRODUCTION OF RAW MATERIALS COMPOSITIONS SUCH AS LIQUIDS, POWDERS OR PASTES IN A PORTABLE VAT

(30) Priorité: 22.12.2006 FR 0611236
(43) Date de publication de la demande: 02.09.2009
(73) Titulaire: Solignac, Jean Pierre, 34270 Saint Mathieu de Tréviers (FR)
(72) Inventeur: Solignac, Jean Pierre, 34270 Saint Mathieu de Tréviers (FR)
(74) Mandataire: Ravina, Bernard
(86) Numéro de dépôt international: PCT/EP2007/064503
(87) Numéro de publication internationale: WO 2008/077960

(56) Documents cités:
- EP-A- 0 099 252
- EP-A- 1 570 730
- EP-A1- 0 654 298
- WO-A-2004/098763
- ES-A1- 2 169 957
- US-A1- 2006 124 196

## Description

### Domaine technique

La présente invention est relative à une machine pour la production de compositions selon des quantités dosées, de matières premières, telles que des liquides, des poudres, des pâtes disposées dans des récipients appropriés. Plus spécifiquement, la présente invention est relative à une machine apte à manipuler des cuves de capacité relativement importante de plusieurs dizaines de kilogrammes et à réaliser dans ces cuves des compositions de plusieurs kilogrammes avec un degré de précision élevé.

### Etat de la technique antérieure.

Actuellement, la production de ce genre de composition est réalisée de façon manuelle ou semi automatique. Ainsi le personnel affecté à cette tâche est appelé à manipuler à la main des récipients relativement lourds ou si ces récipients ne peuvent pas être déplacés à la main à utiliser des transporteurs du type transpalette.

En vue de la réalisation de la composition, les matières premières sont prélevées des récipients correspondants et introduites dans une cuve selon des quantités dosées posée sur une balance incrustée dans le sol. Pour introduire les matières premières dans la cuve de mélange, des vannes sont actionnées manuellement.

Une telle façon d'opérer comporte plusieurs inconvénients parmi lesquels on peut citer :
- la pénibilité et l'insécurité liée au transport manuel ou par transpalette des récipients contenant les diverses matière premières, ainsi qu'à l'exécution de tâches longues et répétitives
- la difficulté à assurer la répétitivité du dosage des composants et la traçabilité des quantités prélevées,
- la difficulté à assurer un degré de précision élevé dans le dosage des composants.

On a cherché par le passé à résoudre les problèmes sus évoqués en mettant en oeuvre des machines de production de compositions comprenant des convoyeurs à tapis sans fin ou équivalent, par le biais desquels les cuves devant recevoir des matières premières sont déplacées sous des dispositifs de prélèvement et de délivrance de ces matières et sont pesées en cours de délivrance.

Le principal inconvénient d'une telle solution réside dans une occupation permanente du sol par le convoyeur qui rend impossible ou très difficile le nettoyage complet du sol comme l'impose les normes sanitaires en vigueur pour certaines industries comme les industries agroalimentaires. Il y a lieu de noter que le nettoyage doit aussi affecter ce convoyeur ce qui rend cette tâche particulièrement longue et fastidieuse. Par ailleurs les organes du convoyeur destinés à être au contact des produits de nettoyage doivent être en une matière apte à résister au pouvoir corrosif de ces derniers ce qui renchérit le coût de ces convoyeurs. II a lieu aussi de souligner que le nettoyage des zones du convoyeur, disposées sous les systèmes de prélèvement des matières premières est rendu difficile par la nature même de ces matières.

De plus s'agissant du transport de charges lourdes à l'aide d'un convoyeur du type précité se pose un problème de sécurité en raison du relatif équilibre instable de ces charges sur le convoyeur. Ce problème se trouve encore accentué par le fait que les rouleaux du convoyeur provoquent des déformations permanentes de la paroi de fond de la cuve qui perd ainsi sa planéité.

Enfin les convoyeurs nécessitent un entretien permanent et un réglage très précis qui font d'eux des outils au fonctionnement peu fiable.

Dans certaines installations connues, le transport de chaque cuve entre la zone de stockage de cette dernière et la zone de délivrance des matières première et inversement est effectué à l'aide d'un chariot élévateur à fourche. L'utilisation d'un tel moyen de transport pose des problèmes de sécurité et de formation de personnel.

Une installation pour le dosage de peinture est connue du document EP 0 099 252.

### Exposé de l'invention

La présente invention a pour objet de résoudre les inconvénients précédemment cités en mettant en oeuvre une machine pour la production automatisée de compositions de matières premières qui ne requiert pas de moyens de convoyage.

À cet effet la machine selon l'invention pour la production automatisée de compositions de matières premières telle que liquides, poudres, ou pâtes se caractérise essentiellement en ce qu'elle comprend :
- un ensemble de guidage disposé au-dessus du sol,
- un châssis support (2) porté par l'ensemble de guidage et mobile sur ce dernier, selon un axe longitudinal horizontal (AA') de la machine,
- un chariot de transport, monté de manière mobile sur le châssis support selon un axe horizontal (BB') perpendiculaire à l'axe longitudinal (AA') de la machine,
- un moyen élévateur porté par le dit chariot, ledit moyen comportant un élément porteur élévateur mobile selon un axe vertical,
- un moyen de pesage porté par l'élément porteur élévateur du moyen élévateur, ledit moyen de pesage comportant un organe sur lequel est appliquée la charge à peser,
- un moyen de préhension des cuves unitairement, lié mécaniquement à l'organe du moyen de pesage, sur lequel est appliquée la charge à peser,
- au moins un dispositif de prélèvement et de distribution de matière première en quantité dosée en regard duquel est destinée à être positionnée la cuve transportée.

On comprend aisément que cette disposition de machine permet de libérer le sol de tout élément mécanique susceptible d'en interdire ou d'en rendre difficile le nettoyage et la décontamination.

En outre la seule partie mobile de la machine se trouve disposée au-dessus du sol à une distance de minimale de quelques mètres de ce dernier de sorte qu'elle se trouve hors de portée du personnel évoluant auprès de la machine. Sont réduits ainsi de manière particulièrement significative les risques d'accident.

Selon une autre caractéristique de l'invention, la machine comporte au moins un mécanisme d'actionnement de dispositif de distribution des matières premières, lequel mécanisme d'actionnement est porté par le chariot de transport.

Une telle disposition permet d'éviter d'associer à chaque dispositif de distribution un dispositif d'actionnement qui lui serait propre et de multiplier les dispositifs d'actionnement. Une telle disposition permet aussi une simplification dans la commande de ces dispositifs d'actionnement.

Selon une autre caractéristique de l'invention, le chariot comprend un carter de protection renfermant ses éléments mécaniques et électriques, ledit chariot par ce carter de protection étant au-dessus des terminaisons des dispositifs de prélèvement. La disposition de caisson et la position de ce caisson évitent que les matières premières en cas de fuite ne viennent au contact des éléments mécaniques et électriques du chariot.

Selon une autre caractéristique de l'invention, le chariot est doté d'un mécanisme de blocage de la cuve pour assurer l'immobilisation de cette dernière par rapport aux moyens de préhension. Est évité ainsi le balancement de la cuve lors de son transport et par voie de conséquence l'apparition de vague dans la cuve de liquide ce qui peut altérer la précision du pesage.

La présente invention à également pour objet une cuve pour composition se caractérisant essentiellement en ce qu'elle comprend deux anses verticales prévues pour coopérer avec le moyen de préhension.

### Description sommaire des figures.

D'autres avantages et caractéristiques de l'invention apparaîtront à la lecture de la description d'une forme préférée de réalisation donnée à titre d'exemple non limitatif en se référant aux dessins annexés en lesquels :
- la figure 1 est une vue de profil d'une machine conforme à l'invention, selon une première forme de réalisation, différentes position de l'ensemble châssis support et chariot de transport sont représentées sur cette figure,
- la figure 2 est une vue de dessus de la machine selon la figure 1,

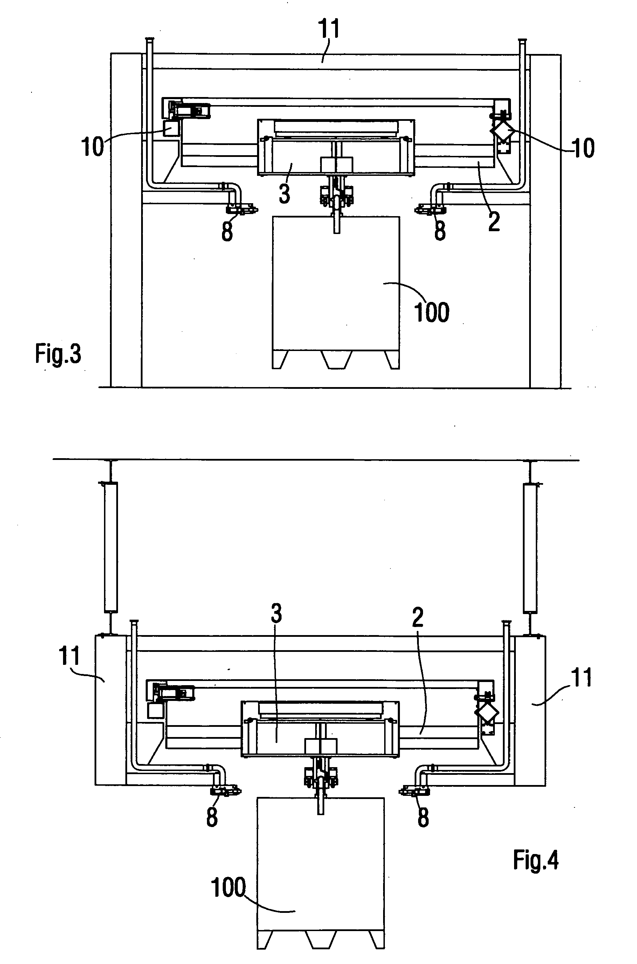

- la figure 3 est une vue de face de la machine selon la figure 1,
- la figure 4 est une vue de face d'une machine selon une seconde forme de réalisation,

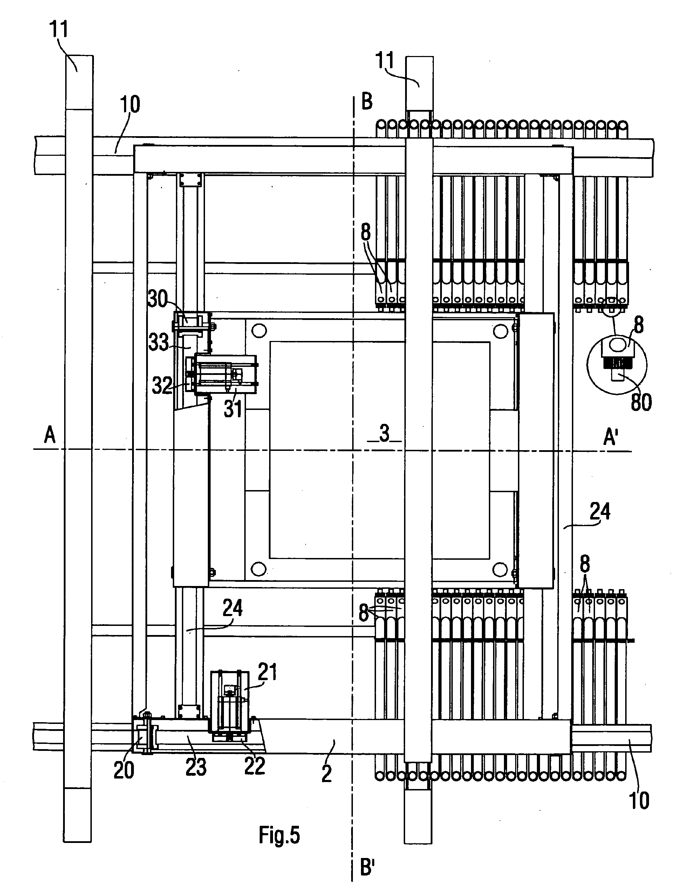

- la figure 5 est une vue de dessus de détail d'une machine selon l'invention, montrant le châssis support et le chariot de transport,

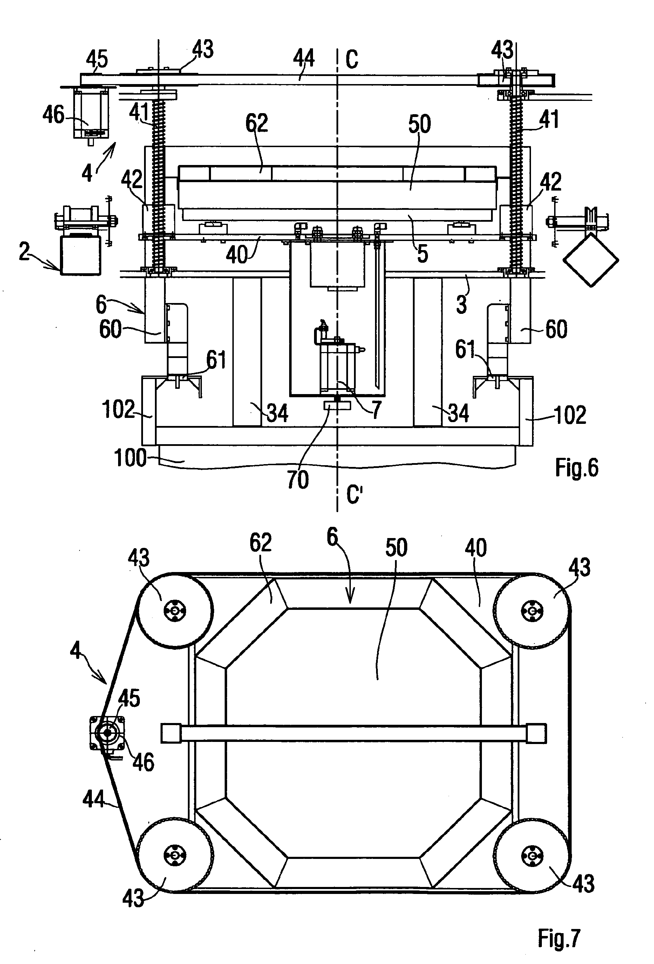

- la figure 6 est une vue du chariot de transport de la machine selon l'invention,
- la figure 7 est une vue de dessus du moyen élévateur,
- la figure 8 est une vue du chariot de transport de la machine équipé d'un moyen de préhension selon une seconde forme de réalisation,
- la figure 9 est une vue de détail du moyen de préhension selon la seconde forme de réalisation et une vue de détail d'une cuve prévue pour recevoir ce moyen.

### Meilleure manière de réaliser l'invention

Telle que représentée, la machine selon l'invention, pour la production automatisée de compositions de matières premières dans au moins une cuve 100 avec couvercle 101, ces matières pouvant être des liquides, des poudres ou des pâtes, comprend une unité de traitement et de gestion des signaux 200, un ensemble de guidage 1 disposé au-dessus du sol, un châssis support 2 porté par l'ensemble de guidage 1 et mobile sur ce dernier, selon un axe longitudinal AA' horizontal de la machine, un chariot de transport 3 monté de manière mobile sur le châssis support 2 selon un axe BB' horizontal perpendiculaire à l'axe longitudinal AA' de la machine, un moyen élévateur 4 porté par le dit chariot 3, ledit moyen élévateur 4 comportant un élément porteur élévateur 40 mobile selon un axe vertical CC', un moyen de pesage 5 porté par l'élément porteur élévateur 40 dudit moyen élévateur 4, un moyen de préhension 6 des cuves 100 unitairement lié mécaniquement au moyen de pesage 5 et plus précisément à un organe 50 de ce dernier prévu pour recevoir la charge à mesurer, et au moins un dispositif de prélèvement et de distribution 8 de matière première en regard duquel est destinée à être positionnée la cuve 100 portée par le moyen de préhension et transportée par l'ensemble de transport et de positionnement constitué par le chariot 3 et le châssis support 2. La cuve 100 est positionnée en regard du dispositif de prélèvement et de distribution 8 afin de recevoir une quantité pondérale prédéterminée de matière première. Le dosage de la matière première est opéré par pesage en continu de la cuve 100 au cours du déversement de la matière première dans cette dernière.

Comme on peut le voir la machine s'étend au-dessus d'une zone de stockage des cuves 100, dans laquelle les cuves 100 occupent des positions assignées et sont par exemple disposées en rangées et colonnes.

L'unité de traitement et de gestion 200, connue en soi, que comporte la machine est apte à traiter les différents signaux électriques qu'elle reçoit des composants de la machine et à gérer le fonctionnement de ces derniers.

L'ensemble de guidage 1, selon la forme préférée de réalisation, comprend deux rails horizontaux parallèles 10 disposés selon un même niveau de hauteur, ces rails étant solidaires d'une structure porteuse 11. Cette structure porteuse 11 est avantageusement constituée par des montants verticaux fixés à la charpente du bâtiment abritant la machine ou bien, selon une autre forme de réalisation, par des portiques en appui par leur jambage sur le sol du bâtiment.

L'ensemble de guidage pourra être organisé en modules, joints les uns aux autres par tous moyens connus de l'homme de l'art.

Le châssis support 2 se présente sous la forme d'un cadre. Ce châssis 2 est équipé d'organes de roulement 20 engagés sur les rails de guidage 10, et d'un moyen moteur pour assurer son déplacement le long des rails. Préférentiellement, le moyen moteur comprend d'une part un moteur électrique pas-à-pas 21 dont l'arbre de sortie rotatif est équipé d'un pignon denté 22 et d'autre part une crémaillère 23 avec laquelle est engrené ledit pignon denté. Dans la pratique le pignon denté 22 sera constitué par une poulie crantée et la crémaillère par une courroie crantée disposée à plat sur l'un des rails de guidage 10.

Une telle disposition est propice au contrôle du déplacement du châssis support 2 le long des rails 10 et au contrôle de la position de ce dernier. Cette position sera déterminée comme connu par comptage du nombre d'impulsions électriques délivrées au moteur pas-à-pas.

Pour un contrôle absolu du déplacement et de la position du châssis, un codeur connu en soi pourra être accouplé à l'arbre de sortie du moteur pas-à-pas.

Pour minimiser les conséquences dues à la perte de l'information relative à la position du châssis support le long des rails 10, est prévue une butée mécanique installée fixement sur l'ensemble de guidage. Cette butée mécanique constitue un point de référence positionnelle. En présence d'une perte d'information, le châssis-support 3 est amené contre la butée afin que sa position soit initialisée.

Le châssis support 2 comprend deux rails de guidage 24 parallèles, horizontaux, disposés selon un même niveau de hauteur, les dits rails 24 étant perpendiculaires aux rails de guidage 10 de l'ensemble de guidage 1.

Le chariot 3 comprend une ossature tridimensionnelle, constituée par assemblage de longerons, montants et traverses. Cette ossature, en partie inférieure, est dotée d'organes de roulement 30 engagés sur les rails de guidage 24 du châssis support, et porte un moyen moteur apte à assurer son déplacement le long des rails de guidage 24. Comme décrit précédemment, le moyen moteur comprend d'une part un moteur électrique pas-à-pas 31 dont l'arbre de sortie rotatif est équipé d'un pignon denté 32 et d'autre part une crémaillère 33 avec laquelle est engrené le pignon denté 22. Préférentiellement le pignon denté 32 est constitué par une poulie crantée et la crémaillère est constituée par une courroie crantée disposée à plat sur l'un des rails de guidage 24. Le contrôle du déplacement et de la position du chariot 3 effectué par comptage du nombre d'impulsions électriques délivrées au moteur pas-à-pas 31.

Un codeur connu en soi pourra être accouplé à l'arbre de sortie du moteur pas-à-pas afin d'assurer le contrôle absolu du déplacement et de la position du chariot de transport.

Enfin de façon à minimiser les conséquences dues à la perte de l'information relative à la position du chariot le long des rails 24, une butée mécanique sera installée fixement le châssis support. Cette butée mécanique constitue un point de référence positionnelle du chariot de sorte qu'en présence d'une perte d'information sur la position du chariot, ce dernier peut être amené contre la butée, afin que sa position puisse être initialisée.

Le moyen élévateur 4, porté par le chariot de transport, comprend un élément porteur élévateur 40 déplaçable en hauteur par un moyen moteur porté par le chariot de transport 3, le moyen de pesage 5 étant installé sur l'élément porteur élévateur 40. Cet élément porteur élévateur est avantageusement constitué par une platine horizontale 40.

Le moyen moteur peut être un vérin électrique, un vérin pneumatique, des poches gonflables et autres organe moteur adapté connu de l'homme du métier. Mais préférentiellement le moyen moteur est constitué par plusieurs colonnes filetées 41 verticales engagées par leur extrémité supérieure et inférieure dans des paliers de guidage portés par l'ossature du chariot de transport, par des écrous 42 engagés en vissage sur les colonnes 41 et fixés à la platine horizontale 40 et par un mécanisme d'actionnement en rotation des dites colonnes 41 autour de leur axe longitudinal.

Le mécanisme d'actionnement comprend des poulies crantées 43 accouplées respectivement aux colonnes filetées 41, une courroie crantée 44 engagée sur les poulies crantées 43 et sur un pignon cranté 45 accouplé à l'arbre de sortie rotatif d'un moteur pas-à-pas 46 installé fixement sur un support approprié fixé à l'ossature du chariot. Cette disposition de moteur pas-à-pas, de pignon cranté, de poulies crantées et de courroie crantée permet d'assurer un contrôle rigoureux du déplacement et de la position en hauteur de la platine 40.

Avantageusement, le moyen de pesage 5 est constitué par au moins une balance à plateau, le plateau de cette balance constituant l'organe 50 sur lequel est appliquée la charge à peser. Le moyen de pesage peut être constitué par une seule balance, mais, en variante, il peut être constitué par plusieurs balances superposées de gammes de pesée et de précisions différentes. La balance est apte à produire un signal électrique représentatif de la valeur de la charge pondérale qu'elle supporte. Ce signal est ensuite traité par l'unité de traitement et de gestion 200.

Le moyen de préhension 6, associé au moyen de pesage, est constitué par deux bras verticaux 60 dotés chacun en extrémité inférieure d'un crochet de préhension 61. Ces deux bras sont solidaires du plateau 50 de la balance 5. Dans la pratique, les deux bras verticaux 60 sont fixés par leur extrémité supérieure à un cadre 62 apposé sur le plateau de la balance 5.

De préférence, le chariot 3 est doté d'un carter de protection renfermant ses éléments mécaniques et électriques, ledit chariot 3 par ce carter de protection étant au-dessus des terminaisons des dispositifs de prélèvement. La disposition de caisson et la position de ce caisson évitent que les matières premières en cas de fuite ne viennent au contact des éléments mécaniques et électriques du chariot.

Par le moyen de préhension tel que décrit, le chariot 3 est amené à saisir la cuve 100 désignée par l'unité de traitement et de gestion. Par activation du mécanisme d'actionnement des colonnes 41, la platine 40, la balance et le moyen de préhension sont déplacés verticalement vers le haut et la cuve se trouve soulevée du sol en vue d'être pesée et transportée vers la zone de prélèvement des matières premières. Avantageusement la cuve n'est soulevée que de quelques millimètres ce qui accroît la sécurité de son transport.

Avantageusement le chariot 3 est doté d'un mécanisme 34 de stabilisation de la cuve 100 pour interdire notamment lors du transport de la cuve, le balancement de cette dernière autour de l'axe géométrique horizontal de suspension que définissent les deux crochets de préhension 61. Cet axe géométrique peut se définir comme étant celui autour duquel la cuve suspendue aux crochets 61 peut librement pivoter. Grâce au mécanisme de stabilisation 34 est évité tout phénomène de vague dans la cuve pouvant perturber la pesée. Compte tenu de la faible distance séparant la cuve 100 du sol, le mécanisme de stabilisation, en s'opposant au balancement de la cuve, est de nature à écarter tout risque de heurt entre le fond de ladite cuve et le sol. Est écarté ainsi le risque de détérioration de la cuve.

Selon une première forme de réalisation, le mécanisme de stabilisation 34 est constitué de deux bras verticaux distants l'un de l'autre fixés rigidement à l'ossature du chariot et disposés symétriquement par rapport à l'axe de suspension ci-dessus défini. La cuve lors de son soulèvement est appliquée contre l'extrémité inférieure des bras ce qui assure sa stabilisation.

Selon une autre forme de réalisation, le moyen de stabilisation est constitué par deux vérins verticaux disposés symétriquement par rapport à l'axe de suspension et fixés chacun par leur corps à l'ossature du chariot. Par déploiement de la tige de chaque vérin est amenée par son extrémité contre la paroi supérieure de la cuve 100.

Comme dit précédemment, la machine est dotée d'au moins un dispositif de prélèvement et de distribution 8.

Préférentiellement, la machine comprend plusieurs dispositifs de prélèvement 8 organisés selon une ou plusieurs rangées horizontales, parallèles à l'axe géométrique AA'. Comme on peut le voir, les dispositifs de prélèvement 8 sont organisés en au moins deux rangées horizontales, latérales, se faisant face.

La machine peut être équipée d'au moins un dispositif 8 de prélèvement de liquide et/ou d'au moins un dispositif de prélèvement et distribution de poudre et/ou d'au moins un dispositif de prélèvement et de distribution de pâte.

Comme on peut le voir, la machine est équipée de plusieurs dispositifs de prélèvement et de distribution de liquide, de plusieurs dispositifs de prélèvement et de distribution de poudre, et de plusieurs dispositifs de prélèvement et de distribution de pâtes.

Selon la forme préférée de réalisation, chaque dispositif de prélèvement et de distribution 8 comporte un organe de commande 80 par action sur lequel est déclenchée la délivrance d'une quantité de matière première. Préférentiellement, pour actionner l'organe de commande 80 est prévu au moins un mécanisme 7 d'actionnement porté par le chariot de transport 3.

Le ou chaque mécanisme d'actionnement 7, porté par le chariot, peut être constitué par un moteur électrique dont l'arbre de sortie est équipé d'une came 70 ou d'un organe d'accouplement par exemple du type de celui décrit dans la demande de brevet FR 0508407. S'agissant d'un moteur avec came, le dispositif de prélèvement 8 pourra être notamment du type de celui décrit dans la demande de brevet FR 0103349 et s'agissant de l'organe d'accouplement, le dispositif de prélèvement pourra être du type de celui décrit notamment dans la demande brevet FR 0508407.

Par déplacement du châssis support 2 le long des rails 10 et déplacement du chariot de transport le long des rails 24, la cuve et le chariot sont disposés en regard du dispositif de prélèvement désigné par l'unité de traitement et de gestion. Plus précisément, le châssis support 2 est déplacé le long des rails de guidage 10 afin d'amener le chariot 3 en regard du dispositif de prélèvement et de délivrance désigné et ensuite, le chariot 3 est déplacé sur les rails de guidage 24 vers le dispositif 8 sélectionné afin que le mécanisme d'actionnement 7 dont il est doté soit amené en correspondance avec l'organe de commande 80 du dispositif de prélèvement 8.

La commande du prélèvement et de la délivrance de la matière première est opérée par activation du mécanisme d'actionnement 7 lequel agit alors sur l'organe de commande 80. La dose prélevée est introduite dans la cuve 100 au travers d'un perçage pratiqué dans le couvercle 101.

Afin d'assurer un positionnement précis du chariot face au dispositif 8 désigné, le positionnement adéquat du mécanisme d'actionnement par rapport à l'organe de commande 80, chaque dispositif de prélèvement 8 est doté d'un moyen d'indexage avec lequel coopère un moyen d'indexage complémentaire porté par le chariot. Dans la pratique, le moyen d'indexage de chaque dispositif de prélèvement est constitué par un perçage pratiqué dans le corps dudit dispositif et le moyen d'indexage, porté fixement par le chariot est constitué par un doigt saillant. Lors de la mise en position du chariot 3 face au dispositif désigné, le doigt saillant du chariot est engagé dans le perçage du dispositif de prélèvement et de distribution 8.

Pour éviter toute pollution du contenu de la cuve, le chariot 3 pourra être équipé d'un organe de protection constitué par un écran de dimensions supérieure à celle de l'ouverture de la cuve, doté d'un perçage traversant par lequel sont déversées vers l'ouverture de la cuve, les matières premières.

Le fonctionnement de la machine est le suivant : le chariot 3 est positionné de manière automatique dans la zone de stockage au-dessus de la cuve 100 dans laquelle la composition doit être réalisée. Le moyen de préhension est abaissé de façon à venir en prise avec la cuve et cette dernière est soulevée de quelques millimètres au-dessus du sol et transportée vers la zone de prélèvement. On notera que le transport à très faible distance du sol contribue à la sécurité de cette opération. On notera également que la cuve est pesée avant introduction de la matière première et qu'elle est pesée de manière continue lors de l'introduction de la matière première. De cette façon est assuré le dosage de la matière première dans la cuve.

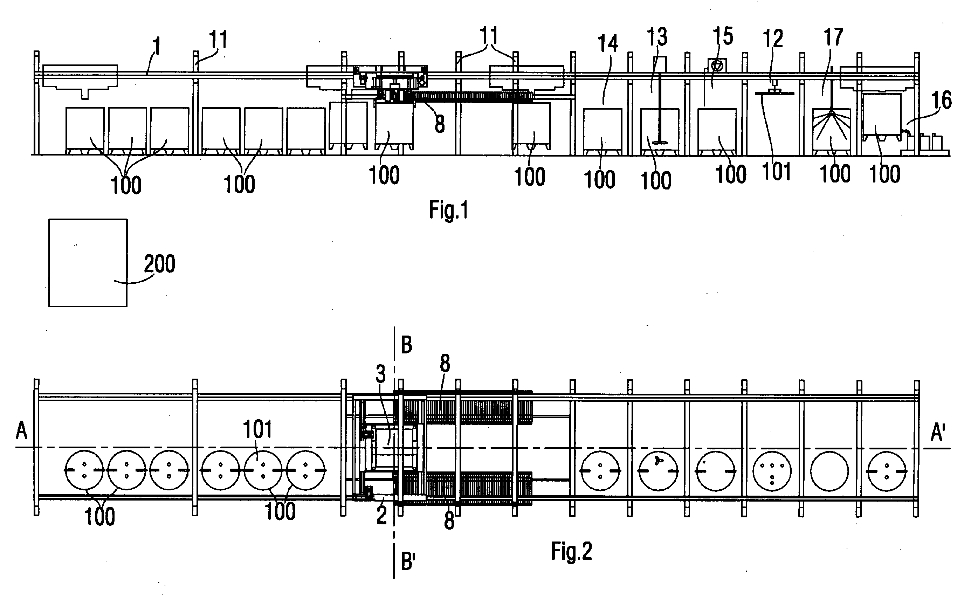

Après avoir reçu la ou les matières premières selon des quantités prédéterminées, la cuve 100 peut être ramenée à son aire de stockage ou bien être transportée par le chariot vers divers modules portés ou associés à la structure de l'ensemble de guidage. Ainsi comme on peut le voir notamment en figure 1, la machine pourra comporter non limitativement, un module 12 de dépose et de pose de couvercle 101, un module 13 d'agitation, un module de regroupement 14, un module d'échantillonnage 15, un module de conditionnement 16 et un module 17 de lavage des cuves ainsi que d'autres modules comme par exemple un module de chauffe, un module de centrifugation, un module de vidange etc.

Le module 12 de dépose de couvercle comprend un dispositif préhenseur 120, monté fixement sur la structure porteuse 11. Ce dispositif préhenseur comprend un bras mobile en hauteur, terminé par un organe de préhension qui peut être constitué par une ou plusieurs ventouses, par exemple du type commandé. L'organe de préhension peut être aussi constitué par un ou plusieurs électroaimants si la nature du matériau du couvercle 101 s'y prête. Le bras mobile peut être constitué par la tige d'un vérin connu en soi.

Le module 13 d'agitation comprend un agitateur connu, monté fixement par son corps sur la tige d'un vérin fixé par son corps sur la structure porteuse 11. Par déploiement de la tige du vérin, l'agitateur est amené à pénétrer dans la cuve pour y agiter son contenu, le couvercle de la cuve ayant été précédemment déposé par le module 12.

Le module de regroupement 14 recouvre une aire sur laquelle les cuves sont déposées afin de recevoir de manière manuelle ou semi automatique des matières premières.

Le module d'échantillonnage 15 a pour but de prélever des échantillons du contenu de la cuve afin d'analyse. Ce module pourra comporter une seringue de soutirage, commandée, portée par exemple par la tige d'un vérin fixé par son corps à la structure porteuse 11. Il pourra comporter de plus des moyens destinés au contrôle de la qualité des produits obtenus et /ou des moyens d'aide à la création de ces produits. Ces moyens pourront être des systèmes d'analyse de colorimétrie, de rhéologie, des systèmes de mesure et de contrôle du pourcentage d'hydrogène et autres, des nez électroniques, des langues électroniques connus en soi et autres.

Le module de conditionnement 16 a pour but de conditionner le contenu de l'une au moins des cuves 100 dans des récipients appropriés, de taille réduite, par exemple des flacons ou autres. Le contrôle de la quantité de composition déversée dans chaque récipient sera effectué par dépesage.

Le module 17 de lavage des cuves a pour but de rincer les cuves à l'aide du solvant utilisé dans la composition future à réaliser dans la cuve concernée. Ce module de lavage comprend notamment une tête d'aspersion portée en extrémité inférieure d'une conduite d'amenée du liquide de lavage, portée par exemple par la tige d'un vérin fixé par son corps à la structure porteuse 11. Par déploiement de la tige du vérin, la tête d'aspersion est introduite dans la cuve à nettoyer.

De préférence ces modules sont fixes par rapport à la structure de machine et forment divers postes de travail mais en variante un ou plusieurs de ces modules pourront être embarqués sur le chariot de transport de façon que plusieurs opérations puissent être effectuées en parallèles ou de manière simultanée tel que le prélèvement des matières premières, l'agitation du mélange etc.

La cuve 100 selon une première forme de réalisation, comprend deux anses verticales 102 dotées chacune en extrémité d'une forme de crochet prévue pour coopérer avec le moyen de préhension 6 que comporte le chariot.

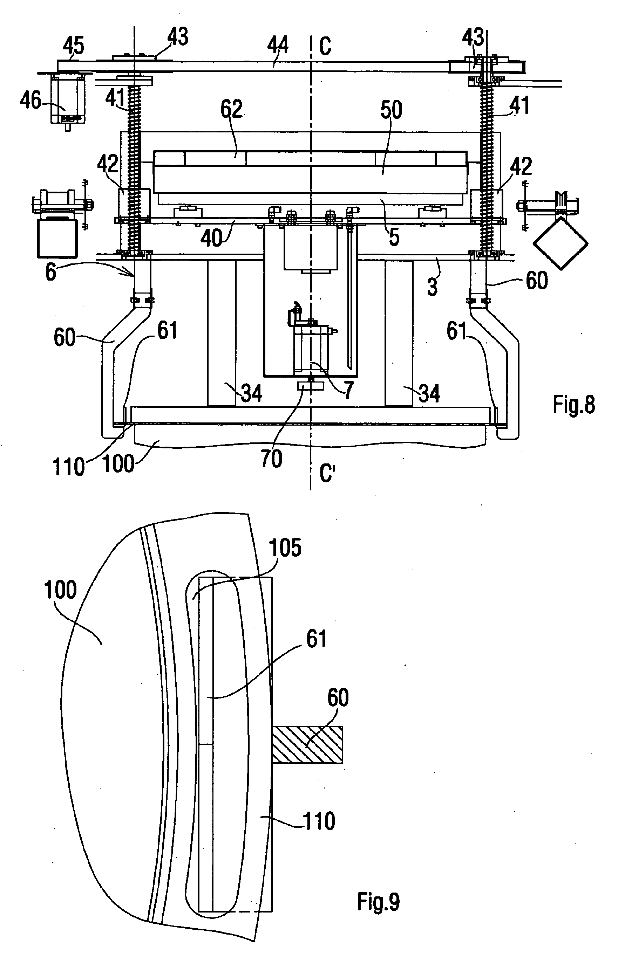

Selon une seconde forme de réalisation telle que représentée en figures 8, 9, les crochets de préhension sont constitués chacun par une plaque verticale triangulaire, montée sur une embase horizontale, formant une pointe dirigée vers le haut et la cuve n'est plus dotée d'anses verticales mais comporte deux lumières oblongues de préhension 105, diamétralement opposées, prévues pour recevoir les crochets, formées dans au moins une saillie radiale 110 externe se présentant par exemple sous la forme d'une collerette. Cette disposition de crochets de préhension triangulaires et de lumières oblongues permet la saisie des cuves même si ces dernières sont légèrement décalées par rapport à leur emplacement de stockage et permet lors de la saisie le centrage de ces cuves 100 par rapport au moyen de préhension. Il y a lieu de noter que les lumières oblongues se développent chacune selon un arc de circonférence de cercle centré sur l'axe de révolution de la cuve. Cette disposition permet de rattraper un mauvais positionnement angulaire de la cuve autour de son axe vertical de révolution et de rétablir une position angulaire adéquate de la cuve. En outre la longueur de la base de chaque crochet de préhension est inférieure de 1 à 2 mm à la longueur de la corde sous tendant l'arc de circonférence de cercle sus évoqué de manière un centrage relativement précis. Lors de sa suspension, la cuve par la face inférieure de la collerette 110 vient en appui sur l'embase horizontale que présente chaque crochet.

En raison d'un décalage trop prononcé, la cuve peut se trouver sur la trajectoire du moyen de préhension. Si tel est le cas, le moyen de préhension va être amené à percuter la cuve. Le choc en résultant sera détecté par le moyen de pesage et un signal électrique sera reçu par l'unité de traitement et de gestion 200. En raison de la géométrie cylindrique de la cuve, le chariot de transport sous l'effet du choc va subir une poussée latérale sous l'effet de laquelle il va être amené à se déplacer dans un sens ou dans l'autre. Par analyse du sens du déplacement de ce chariot, l'unité de traitement pourra déterminer la nature du décalage droite ou gauche de la cuve par rapport à son emplacement nominal. Il sera alors possible par déplacements pas à pas de faible valeur, de positionner de manière adéquate le moyen de préhension par rapport à la cuve afin que cette dernière soit saisie et ramenée dans son emplacement.

II y a lieu de noter que la vitesse de déplacement du châssis support ou du chariot est faible de sorte que le choc généré par la percussion de la cuve 100 par le moyen de préhension 6 demeure faible et bien en deçà d'une valeur pouvant conduire à la détérioration des éléments.

Il y a lieu de noter aussi que par les moyens décrits il est possible de détecter tout type d'obstacle placé sur la trajectoire du moyen de préhension.

Pour renforcer le degré de sécurité de la machine et éviter la manutention des charges alors que du personnel se trouve dans un périmètre prédéterminé par exemple dans l'aire d'évolution des charges, la machine sera équipée d'un système de localisation connu en soi pouvant être par exemple un système de détection d'organes émetteurs, portatifs, portés par le personnel. Ces organes pourront être des transpondeurs, des puces RFID et autres dont l'avantage est de posséder un identifiant propre à la personne. La détection d'une ou plusieurs personnes dans le périmètre prédéfini pourra se traduire par l'émission d'un signal d'alerte et par l'arrêt de la machine. Seront ainsi réduits les risques que des personnes soient heurtées par les cuves lors de leur transport. Les risques d'inhalation de vapeurs toxiques par les personnes se trouvant dans l'environnement de la machine se trouveront ainsi fortement réduits. L'utilisation de puce RFID ou éléments d'identification permettra par identification de la personne d'assurer une traçabilité des déplacements de cette dernière afin de pouvoir déterminer la nature des éventuels dangers auxquels elle a été exposée et en cas de problèmes médicaux de pouvoir identifier rapidement la cause de ces derniers.

Les cuves 100 pourront, le cas échéant être équipées de système de contrôle tel que température et autre ainsi que d'équipements techniques tels qu'agitateurs, analyseurs, et organes de vidanges.

Enfin il faut noter que l'utilisation du mouvement trois axes de la machine permet d'éviter des situations critiques tels que le positionnement du trou d'introduction de la matière dans la cuve en dessous d'une vanne contenant une matière première non prévu dans la composition.

La machine telle que précédemment décrite permet aussi la saisie et la pesée automatisée d'une pièce devant subir des modifications tels qu'un traitement de surface consistant par exemple en l'application d'un revêtement spécial, d'une peinture, d'un vernis, d'une colle voire même d'un sablage et dont la qualité de l'exécution peut être contrôlée au travers de la variation du poids de celle-ci.

Dans ce cas, seront utilisées des buses de peinture ou tout autre système de projection.

Il va de soi que la présente invention peut recevoir tous aménagements et variantes du domaine des équivalents techniques sans pour autant sortir du cadre du présent brevet. C'est ainsi que sur un même ensemble de guidage peuvent être installés plusieurs ensembles constitués chacun d'un châssis support et d'un chariot chaque ensemble ayant sa fonction et son territoire attitré. La gestion des conflits de territoire sera assurée par l'unité de traitement et de gestion 200.

## Revendications

1. Machine pour la production automatisée de compositions de matières premières telles que liquides, poudres, ou pâtes dans au moins une cuve (100) **caractérisée en ce qu'**elle comprend :
- un ensemble de guidage (1) disposé au-dessus du sol,
- un châssis support (2) porté par l'ensemble de guidage (1) et mobile sur ce dernier, selon un axe longitudinal horizontal (AA') de la machine,
- un chariot de transport (3), monté de manière mobile sur le châssis support (2) selon un axe horizontal (BB') perpendiculaire à l'axe longitudinal (AA') de la machine,
- un moyen élévateur (4) porté par le dit chariot (3), ledit moyen élévateur (4) comportant un élément porteur élévateur (40) mobile selon un axe vertical,
- un moyen de pesage (5) porté par l'élément porteur élévateur (40) du moyen élévateur (4), ledit moyen de pesage comportant un organe (50) sur lequel est appliquée la charge à peser,
- un moyen de préhension (6) des cuves (100) unitairement, lié mécaniquement à l'organe (50) du moyen de pesage (5),
- au moins un dispositif de prélèvement et de distribution (8) de matière première en regard duquel est destinée à être positionnée la cuve transportée.

2. Machine selon la revendication 1, **caractérisée en ce que** le ou chaque dispositif de prélèvement et de distribution (8) comporte un organe de commande (80) par action sur lequel est déclenchée la délivrance d'une quantité de matière première et qu'elle comporte au moins au moins un mécanisme 7 d'actionnement porté par le chariot de transport 3, destiné à actionner l'organe de commande (80) du ou de chaque dispositif de prélèvement et de délivrance.

3. Machine selon la revendication 1 ou la revendication 2, **caractérisée en ce que** l'ensemble de guidage (1) comprend deux rails horizontaux parallèles (10) disposés selon un même niveau de hauteur, les dits rails étant solidaires d'une structure porteuse (11).

4. Machine selon la revendication 3, **caractérisée en ce que** le châssis support (2) est équipé d'organes de roulement (20) engagés sur les rails de guidage (10), le châssis support (2) étant équipé d'un organe moteur(21) pour assurer son déplacement le long des rails (10).

5. Machine selon l'une des revendications 3 ou 4, **caractérisée en ce que** le châssis support (2) comprend deux rails de guidage parallèles horizontaux (24), disposés selon un même niveau de hauteur, les dits rails (24) étant perpendiculaires aux rails (10) de l'ensemble de guidage (1).

6. Machine selon la revendication 5, **caractérisé en ce que** le chariot (3) est doté d'organes de roulement (30) engagés sur les rails de guidage (24) du châssis support (2), le chariot (3) étant équipé d'un organe moteur (31) pour assurer son déplacement le long des dits rails de guidage (24).

7. Machine selon l'une quelconque des revendications précédentes, **caractérisée en ce que** le l'élément porteur élévateur (40) du moyen élévateur (4) est constitué par une platine horizontale (40) et que cet élément porteur élévateur (40) est déplaçable en hauteur par un moyen moteur porté par le chariot de transport (3), le moyen de pesage (5) étant installé sur la platine horizontale (40).

8. Machine selon la revendication 7, **caractérisé en ce que** le moyen moteur du moyen élévateur (4) est constitué par plusieurs colonnes filetées (41) verticales engagées par leur extrémité supérieure et inférieure dans des paliers de guidage portés par l'ossature du chariot (3), par des écrous (42) engagés en vissage sur les colonnes (41) et fixés à la platine horizontale (40) et par un mécanisme d'actionnement en rotation des dites colonnes (41) autour de leur axe longitudinal, lequel mécanisme comprend des poulies crantées (43) accouplées respectivement aux colonnes filetées 41, une courroie crantée (44) engagée sur les poulies crantées (43) et sur un pignon cranté (45) accouplé à l'arbre de sortie rotatif d'un moteur pas à pas (46) installé fixement sur un support approprié fixé à l'ossature du chariot (3).

9. Machine selon l'une quelconque des revendications précédentes, **caractérisée en ce que** le moyen de pesage (40) est constitué par au moins une balance comportant un plateau (50).

10. Machine selon l'une quelconque des revendications précédentes, **caractérisée en ce que** le moyen de préhension (6) est constitué par deux bras verticaux (60) doté en extrémité inférieure de deux crochets de préhension (61).

11. Machine selon les revendications 9 et 10 prises ensemble, **caractérisée en ce que** les deux bras (60) du système de préhension (6) sont solidaires du plateau (50) de la balance.

12. Machine selon la revendication 10 ou la revendication 11, **caractérisée en ce que** chaque crochet (61) est constitué d'une plaque verticale de forme triangulaire, montée sur une embase horizontale, formant pointe vers le haut.

13. Machine selon la revendication 12 **caractérisée en ce qu'**elle est équipée d'au moins une cuve (100) dotée de deux lumières oblongues de préhension (105), diamétralement opposées, prévues pour recevoir les crochets (91), les dites lumières étant formées dans au moins une saillie radiale (110) externe et se développant chacune en arc de circonférence de cercle centré sur l'axe de révolution de la cuve.

14. Machine selon l'une quelconque des revendications précédentes, **caractérisée en ce que** le chariot (3) est doté d'un mécanisme de stabilisation (34) de la cuve (100) pour interdire le balancement de cette dernière lors de son transport.

15. Machine selon l'une quelconque des revendications précédentes, **caractérisée en ce que** le chariot (3) comprend un carter de protection renfermant ses éléments mécaniques et électriques, ledit chariot par ce carter de protection étant au-dessus des terminaisons des dispositifs de prélèvement (8).

16. Machine selon l'une quelconque des revendications précédentes, **caractérisée en ce qu'**elle est équipée d'un module (12) de dépose et de pose du couvercle (101) des cuves (100).

17. Machine selon l'une quelconque des revendications précédentes, **caractérisée en ce qu'**elle est équipée d'un module (13) d'agitation du contenu des cuves.

18. Machine selon l'une quelconque des revendications précédentes, **caractérisée en ce qu'**elle est équipée d'un module (14) de regroupement.

19. Machine selon l'une quelconque des revendications précédentes, **caractérisée en ce qu'**elle est équipée d'un module (15) d'échantillonnage.

20. Machine selon l'une quelconque des revendications précédentes, **caractérisée en ce qu'**elle est équipée d'un module (16) de conditionnement du contenu de l'une au moins des cuves (100) dans des récipients, le contrôle de la quantité de composition déversée dans chaque récipient étant effectué par dépesage.

21. Machine selon l'une quelconque des revendications précédentes, **caractérisée en ce qu'**elle est équipée d'un module (17) de lavage des cuves.

22. Machine selon l'une quelconque des revendications précédentes, **caractérisée en ce qu'**elle est équipée d'une unité de traitement et de gestion (200)apte à traiter les différents signaux électriques qu'elle reçoit des divers composants et apte à gérer le fonctionnement de ces derniers.

## Claims

1. A machine for the automated production of raw-materials compositions such as liquids, powders or pastes in at least one vessel (100), **characterised in that** it comprises:
- a guidance assembly (1) disposed above the ground,
- a support chassis (2) carried by the guidance assembly (1) and able to move on the latter, along a horizontal longitudinal axis (AA') of the machine,
- a transport carriage (3), mounted so as to be able to move on the support chassis (2) along a horizontal axis (BB') perpendicular to the longitudinal axis (AA') of the machine,
- an elevator means (4) carried by said carriage (3), said elevator means (4) comprising an elevator carrying element (40) able to move on a vertical axis,
- a weighing means (5) carried by the elevator carrying element (40) of the elevator means (4), said weighing means comprising a member (50) to which the load to be weighed is applied,
- a means (6) of gripping the vessels (100) in a unitary fashion, mechanically connected to the member (50) of the weighing means (5),
- at least one device (8) for taking and distributing raw material opposite which the transported vessel is intended to be positioned.

2. A machine according to claim 1, **characterised in that** the or each taking and distributing device (8) comprises a control member (80) by action on which the delivery of a quantity of raw material is triggered and **in that** it comprises at least one actuation mechanism (7) carried by the transport carriage (3), intended to actuate the control member (80) of the or each taking and delivering device.

3. A machine according to claim 1 or claim 2, **characterised in that** the guidance assembly (1) comprises two parallel horizontal rails (10) disposed at the same height level, said rails being secured to a carrier structure (11).

4. A machine according to claim 3, **characterised in that** the support chassis (2) is equipped with running members (20) engaged on the guide rails (10), the support chassis (2) being equipped with a drive member (21) for moving it along the rails (10).

5. A machine according to one of claims 3 or 4, **characterised in that** the support chassis (2) comprises two horizontal parallel guide rails (24), disposed at the same height level, said rails (24) being perpendicular to the rails (10) of the guidance assembly (1).

6. A machine according to claim 5, **characterised in that** the carriage (3) is provided with running members (30) engaged on the guide rails (24) of the support chassis (2), the carriage (3) being equipped with a drive member (31) for moving it along said guide rails (24).

7. A machine according to any one of the preceding claims, **characterised in that** the elevator carrying element (40) of the elevator means (4) comprises a horizontal plate (40) and **in that** this elevator carrying element (40) is movable in height by a drive means carried by the transport carriage (3), the weighing means (5) being installed on the horizontal plate (40).

8. A machine according to claim 7, **characterised in that** the drive means of the elevator means (4) is formed by several vertical threaded columns (41) engaged by their top and bottom ends in guide bearings carried by the framework of the carriage (3), by nuts (42) engaged by screwing on the columns (41) and fixed to the horizontal plate (40) and by a mechanism for rotationally actuating said columns (41) about their longitudinal axis, said mechanism comprising notched pulleys (43) coupled respectively to the threaded columns (41), a notched belt (44) engaged on the notched pulleys (43) and on a notched pinion (45) coupled to the rotary output shaft of a stepping motor (46) fixedly installed on a suitable support fixed to the framework of the carriage (3).

9. A machine according to any one of the preceding claims, **characterised in that** the weighing means (40) comprises at least one set of scales comprising a deck (50).

10. A machine according to any one of the preceding claims, **characterised in that** the gripping means (6) is formed by two vertical arms (60) provided at the bottom end with two gripping hooks (61).

11. A machine according to claims 9 and 10 taken together, **characterised in that** the two arms (60) of the gripping system (6) are secured to the deck (50) of the scales.

12. A machine according to claim 10 or claim 11, **characterised in that** each hook (61) comprises a triangular-shaped vertical plate, mounted on a horizontal base, forming an upward apex.

13. A machine according to claim 12, **characterised in that** it is equipped with at least one vessel (100) provided with two oblong gripping slots (105) diametrically opposed, designed to receive the hooks (91), the said slots being formed in at least one external radial projection (110) and each developing in an arc of a circumference of a circle centred on the axis of revolution of the vessel.

14. A machine according to any one of the preceding claims, **characterised in that** the carriage (3) is provided with a mechanism (34) for stabilising the vessel (100) to prevent the rocking of the latter during transportation thereof.

15. A machine according to any one of the preceding claims, **characterised in that** the carriage (3) comprises a protective casing enclosing its mechanical and electrical components, said carriage through this protective casing being above the terminations of the taking devices (8).

16. A machine according to any one of the preceding claims, **characterised in that** it is equipped with a module (12) for removing and placing the lid (101) of the vessels (100).

17. A machine according to any one of the preceding claims, **characterised in that** it is equipped with a module (13) for stirring the content of the vessels.

18. A machine according to any one of the preceding claims, **characterised in that** it is equipped with a grouping module (14).

19. A machine according to any one of the preceding claims, **characterised in that** it is equipped with a sampling module (15).

20. A machine according to any one of the preceding claims, **characterised in that** it is equipped with a module (16) for packing the content of at least one of the vessels (100) in receptacles, the quantity of composition poured into each receptacle being checked by weighing.

21. A machine according to any of the preceding claims, **characterised in that** it is equipped with a module (17) for washing the vessels.

22. A machine according to any one of the preceding claims, **characterised in that** it is equipped with a processing and management unit (200) able to process the various electrical signals that it receives from the various components and able to manage the functioning of the latter.

## Patentansprüche

1. Maschine für die automatisierte Produktion von Rohmaterialzusammensetzungen, wie Flüssigkeiten, Puder oder Pasten in mindestens einem Gefäß (100), **dadurch gekennzeichnet, dass** sie umfasst:
- eine oberhalb des Bodens angeordnete Führungsbaugruppe (1),
- ein von der Führungsbaugruppe (1) getragenes Traggestell (2), das auf der Führungsbaugruppe entlang einer horizontalen Längsachse (AA') der Maschine beweglich ist,
- einen Transportwagen (3), der auf dem Traggestell (2) angebracht ist und entlang einer zur Längsachse (AA') senkrechten Horizontalachse (BB') beweglich ist,
- einen von dem Transportwagen (3) getragenen Elevator (4), der ein entlang einer Vertikalachse bewegliches Trag-Hebeteil (40) umfasst,
- eine von dem Trag-Hebeteil (40) des Elevators (4) getragene Wiegeeinrichtung (5), die ein Bauteil (50), auf das die zu wiegende Ladung aufgebracht wird, umfasst,
- eine Einrichtung (6) zum einheitlichen Greifen der Gefäße (100), die mit dem Bauteil (50) der Wiegeeinrichtung (5) mechanisch verbunden ist, und
- mindestens eine Vorrichtung (8) zum Entnehmen und Abgeben von Rohmaterial, wobei das transportierte Gefäß bezüglich der Vorrichtung (8) zu positionieren ist.

2. Maschine nach Anspruch 1, **dadurch gekennzeichnet, dass** die/jede Entnahme- und Abgabevorrichtung (8) eine Steuereinheit (80) umfasst, durch deren Betätigung die Abgabe einer Menge Rohmaterial ausgelöst wird, und dass sie mindestens einen von dem Transportwagen (3) getragenen Betätigungsmechanismus (7) umfasst, der zum Betätigen der Steuereinheit (80) der/jeder Entnahme- und Abgabevorrichtung ausgelegt ist.

3. Maschine nach Anspruch 1 oder 2, **dadurch gekennzeichnet, dass** die Führungsbaugruppe (1) zwei auf gleichem Höhenniveau angeordnete, horizontale und parallele Schienen umfasst, die mit einer Trägerstruktur (11) fest verbunden sind.

4. Maschine nach Anspruch 3, **dadurch gekennzeichnet, dass** das Traggestell (2) mit auf den Führungsschienen (10) angreifenden Rolleinrichtungen (20) versehen ist, wobei das Traggestell (2) mit einer Antriebseinheit (21) versehen ist, um sein Verfahren entlang der Schienen (10) zu gewährleisten.

5. Maschine nach einem der Ansprüche 3 oder 4, **dadurch gekennzeichnet, dass** das Traggestell (2) zwei auf gleichem Höhenniveau befindliche parallele, horizontale Führungsschienen (24) umfasst, welche rechtwinklig zu den Schienen (10) der Führungsbaugruppe (1) angeordnet sind.

6. Maschine nach Anspruch 5, **dadurch gekennzeichnet, dass** der Wagen (3) mit auf den Führungsschienen (24) des Traggestells (2) angreifenden Rolleinrichtungen (30) ausgestattet ist, wobei der Wagen (3) mit einer Antriebseinheit (31) versehen ist, um sein Verfahren entlang der Führungsschienen (24) zu gewährleisten.

7. Maschine nach einem der vorstehenden Ansprüche, **dadurch gekennzeichnet, dass** das Trag-Hebeteil (40) des Elevators (4) aus einer horizontalen Platte (40) gebildet ist und dass dieses Trag-Hebeteil (40) durch eine vom Wagen (3) getragene Antriebseinrichtung in Höhenrichtung verfahrbar ist, wobei die Wiegeeinrichtung (5) auf der horizontalen Platte (40) angebracht ist.

8. Maschine nach Anspruch 7, **dadurch gekennzeichnet, dass** die Antriebseinrichtung des Elevators (4) aus mehreren vertikalen, mit Gewinde versehenen Säulen (41) besteht, die mit ihrem oberen und unteren Ende in von dem Gerüst des Wagens (3) gehaltenen Führungslagern gelagert sind, aus in Schraubverbindung mit den Säulen (41) stehenden und an der horizontalen Platte (40) befestigten Muttern (42) und aus einem Mechanismus zum Drehantrieb der Säulen (41) um ihre Längsachse, welcher Mechanismus gezähnte, mit den jeweiligen mit Gewinde versehenen Säulen (41) verbundene Riemenscheiben (43) sowie einen Zahnriemen (44) umfasst, der mit den gezähnten Riemenscheiben (43) und einem gezähnten Getrieberad (45) im Eingriff ist, welches mit der rotatorischen Ausgangswelle eines Schrittmotors (46) verbunden ist, der fest an einem geeignet am Gerüst des Wagens (3) befestigten Träger angebracht ist.

9. Maschine nach einem der vorstehenden Ansprüche, **dadurch gekennzeichnet, dass** die Wiegeeinrichtung (40) aus mindestens einer eine Tragplatte (50) umfassenden Waage gebildet ist.

10. Maschine nach einem der vorstehenden Ansprüche, **dadurch gekennzeichnet, dass** die Greifeinrichtung (6) aus zwei vertikalen Armen (60) gebildet ist, welche am unteren Ende mit zwei Greifhaken (61) versehen sind.

11. Maschine nach den Ansprüche 9 und 10 zusammengenommen, **dadurch gekennzeichnet, dass** die beiden Arme (60) des Greifsystems (6) mit der Tragplatte (50) der Waage fest verbunden sind.

12. Maschine nach Anspruch 10 oder Anspruch 11, **dadurch gekennzeichnet, dass** jeder Haken (61) aus einer vertikalen, dreieckigen Platte gebildet ist, die auf einem horizontalen Sockel mit der Spitze nach oben angebracht ist.

13. Maschine nach Anspruch 12, **dadurch gekennzeichnet, dass** sie mindestens ein Gefäß (100) umfasst, das mit zwei länglichen einander gegenüberliegenden Greiföffnungen (105) zur Aufnahme der Haken (91) versehen ist, wobei die Öffnungen in mindestens einen äußeren radialen Vorsprung (110) geformt sind, und jede einen kreisförmigen Umfangsbogen um die Rotationsachse des Gefäßes bildet.

14. Maschine nach einem der vorstehenden Ansprüche, **dadurch gekennzeichnet, dass** der Wagen (3) mit einem Stabilisierungsmechanismus (34) für das Gefäß (100) versehen ist, um das Schaukeln des Gefäßes während seines Transports zu verhindern.

15. Maschine nach einem der vorstehenden Ansprüche, **dadurch gekennzeichnet, dass** der Wagen (3) ein seine mechanischen und elektrischen Bauteile umschließendes Gehäuse umfasst, wobei der Wagen sich durch dieses Schutzgehäuse oberhalb der Endungen der Entnahmevornchtungen (8) befindet.

16. Maschine nach einem der vorstehenden Ansprüche, **dadurch gekennzeichnet, dass** sie mit einem Modul (12) zum Abnehmen und Aufsetzen des Deckels (101) der Gefäße (100) ausgestattet ist.

17. Maschine nach einem der vorstehenden Ansprüche, **dadurch gekennzeichnet, dass** sie mit einem Modul (13) zum Umrühren des Gefäßinhalts ausgestattet ist.

18. Maschine nach einem der vorstehenden Ansprüche, **dadurch gekennzeichnet, dass** sie mit einem Gruppierungsmodul (14) ausgestattet ist.

19. Maschine nach einem der vorstehenden Ansprüche, **dadurch gekennzeichnet, dass** sie mit einem Probeentnahmemodul (15) ausgestattet ist.

20. Maschine nach einem der vorstehenden Ansprüche, **dadurch gekennzeichnet, dass** sie mit einem Modul (16) zum Abpacken des Inhalts mindestens eines Gefäßes (100) in Behälter ausgestattet ist, wobei die Steuerung/Regelung der in jeden Behälter abgefüllten Menge durch Abwiegen erfolgt.

21. Maschine nach einem der vorstehenden Ansprüche, **dadurch gekennzeichnet, dass** sie mit einem Modul (17) zur Reinigung der Gefäße ausgestattet ist.

22. Maschine nach einem der vorstehenden Ansprüche, **dadurch gekennzeichnet, dass** sie mit einer Signalverarbeitungs- und Steuereinheit (200) ausgestattet ist zum Verarbeiten der unterschiedlichen von den verschiedenen Komponenten empfangenen Signale und zum Steuern der Funktionsweise der Komponenten.
